# EUROPEAN PATENT APPLICATION

(11) **EP 2 221 152 A1**
(43) Date of publication of application: **25.08.2010**
(21) Application number: 09153193.9
(22) Date of filing: 19.02.2009
(51) Int. Cl.: B25J 9/16

(54) **A robot system and a method for picking and placing components**

(71) Applicant: ABB Technology AB, 721 83 Västerås (SE)
(72) Inventor: Knobel, Henrik, 187 32 Täby (SE); Stom, Bengt, 471 60 Myggenäs (SE)
(74) Representative: Reyier, Ann-Mari

(57) **Abstract**

The present invention relates to a method and a robot system for picking and placing components comprising: an industrial robot (1) configured to pick components at a first site (10) and to place the components at a second site (14), the robot is programmed to move along a predefined path (18) between the first and second site and the movements of the robot along the predefined path is controlled by a robot program, a robot controller (2) arranged to execute the robot program, a camera arranged to capture images of the component, a computing unit (17) configured to determine the position of the component with respect to the robot based on the image of the component, and to determine the deviation between the determined position of the component and a standard position of the component defined with respect to the robot, and the robot controller is configured to correct the robot movements for placing the component at the second site based on the determined deviation. The camera (20) is fixedly arranged in a position close to the predefined path and the robot controller is configured to generate an order to the camera to capture an image of the component at a predefined point on the predefined path with the tool in a predefined tool orientation, while moving the robot holding the component along the path, and the order to the camera to acquire an image of the component is generated by the robot program.

## Description

### FIELD OF THE INVENTION

The present invention relates to a method for picking components at a first site and placing the components at a second site by means of an industrial robot holding a picking tool, and the robot is programmed to move along a predefined path between the first and second site and the movements of the robot along the path is controlled by a robot program.The invention also relates to a robot system for picking and placing components.

### PRIOR ART

Automation of picking and placing objects by using an industrial robot is well known. The robot picks the component on a first site, for example workpieces from a bin or a pallet, and moves the component to a second site, for example to a conveyer, and places the products on the second site, for example on the conveyer. A problem when picking the components is that the position of the components is not always known. A solution to this problem is to use a camera, which captures an image of the component to be picked and a computer, which analyzes the image and determines the position of the component based on the analyses of the image. A further problem occurs when the robot has picked the component since the position of the component relative to the robot has to be determined in order to correctly place the component on the second site. A known solution to this problem is to use a second camera to capture a picture of the component after the robot has picked the component.

US 4,305,130 discloses a robot assembly for acquiring unorien-tated workpieces from a bin. A sensing system views the bin and collects data. A computer analyzes the data to determine the positions of the workpieces before picking the workpiece. The hand of the robot then engages a workpiece based on the determined position. The robot moves the workpiece to a pose where the position and orientation of the workpiece are determined. After this determination, the workpiece is moved to a final goal site. The sensing system includes a first camera, which is secured to the arm of the robot, and which is used for determining the position of the component before it is picked, and a second camera, which is rigidly mounted at a position outside the robot, and which is used to obtain a view of the workpiece in the robot hand. From this view a set of features is extracted and compared with a similar set for a taught presentation pose. The difference between the position and orientation of the features is used to compute the translation and rotations of the workpiece in the robot hand. A disadvantage with this method is the extra time it takes to move the robot with the workpiece to the pose where the position and orientation of the workpiece are determined. This extra time prolongs the cycle time of the picking and placing operation.

A solution to this problem is presented in DE 10319253. The document discloses a method for position correct feeding of parts wherein the position of a part gripped by the robot is determined by means of a camera which are attached to the robot and which is movable with the robot. The position of the grip part relative to the robot is determined, the deviation in the position of the part from a standard position, defined in advance, with respect to the robot is established, and a pre-determined robot movement for a standard position defined in advance is corrected with a aid of this deviation in the position of the part, in order to achieve the feeding position. By fasten the camera directly or indirectly to the robot and movable with the robot the extra time needed for moving the robot with the workpiece to a pose in front of the camera where the position and orientation of the workpiece are determined is eliminated. The same camera is also used to localize the workpieces for the purpose of being gripped.

However, a problem with using cameras mounted directly on the robot and movable with the robot is that it is difficult to mount the camera in a correct position. A further disadvantage is the risk for tangle of the cables to the camera, and the risk for collision between the camera and other objects in the robot cell while moving the robot.

### OBJECTS AND SUMMARY OF THE INVENTION

The object of the present invention is to provide an improved method for picking and placing components, which alleviates the above mentioned problems and disadvantages.

This object is achieved by a method as defined in claim 1.

Such a method comprises: programming the robot to move along a predefined path between a first and second site, arranging a camera in a fixed position close to the predefined path, instructing the robot to pick a component at the first site, moving the robot holding the component along the predefined path, orientating the tool to a defined orientation, generating an order to the camera to acquires an image of the component at a predefined point on the predefined path, and with the tool in the defined orientation, while moving the robot along the path, wherein the order to the camera to capture the image of the component is generated by the robot program, determining the position of the component with respect to the robot based on the acquired image of the component, determining the deviation between the determined position of the component and a standard position of the component defined with respect to the robot, calculating a place position at the second site for the component based on the deviation, and generating a new path for the robot to place the component at the second site based on the calculated place position.

According to the invention an order to the camera to acquire an image of the component is generated at a predefined point on the pre-programmed path while the robot is moving along the path and holding the component. As the camera is fixedly arranged in the surroundings of the robot and not attached to the robot the above mentioned disadvantages with having a camera mounted on the robot is eliminated. Since the image is acquired while the robot is moving between the first and second site the robot does not need to move to a certain location where the position of the component is determined, and the robot does not need to stop in the certain location while the image is captured. Accordingly, no extra cycle time is needed for determining the position of the component relative to the robot.

The camera is trigged on the fly without the need of a sensor detecting the position of the robot. The camera is trigged independent of the speed of the robot and the trigger is set in a specific position of the repetitive path.

The movements of the robot along the predefined path are controlled by a robot program and a robot controller is arranged to execute the robot program. According to the invention the order to the camera to acquire an image of the component is generated by the robot program. The robot program, which controls the movement of the robot along the path, includes one or more program instructions that generate an order to the camera to capture an image of the component. The robot controller generates the order to the camera upon executing those program instructions. The order is generated at a predefined position on the path. As the program is controlling the movements of the robot, the program knows the robot position on the path, and accordingly when the robot is in the predefined position on the path, and thus when the order to the camera is to be generated. Accordingly, it is not necessary to detect when the robot is in the defined position. No sensor is used, thereby avoiding environmental problems like dust, dirt, and electrical malfunction of the sensor. The trigger position is based on the robot program, and not the physical installations of sensors. The camera is trigged in an exact position by the robot program itself.

A further object of the present invention is to provide an improved robot system for picking and placing components.

Such a robot system is **characterized in that** that the camera unit includes a camera fixedly arranged in a position close to the predefined path, and the robot controller is configured to generate an order to the camera to capture an image of the component at a predefined point on the predefined path with the tool in a predefined tool orientation, while moving the robot holding the component along the path, and the order to the camera to capture an image of the component is generated by the robot program.

According to an embodiment of the invention, the components are randomly placed in a stack of random height and the camera unit is arranged to capture an image of the component on top of the stack, said computing unit is configured to determine the position and orientation of the component on top of the stack based on the captured image, and the robot controller is configured to generate a path for the robot to pick the component based on the determined position and orientation of the component.

According to an embodiment of the invention, the same camera is used to capture images of the component on top of the stack and to capture images of the component after the robot has picked the component. Thereby hardware cost is reduced.

According to an embodiment of the invention, the components are to be placed in boxes delivered on a conveyer at the second site, and the camera unit comprises a third camera mounted such that it captures images of the boxes on the conveyer, the computing unit is configured to receive the images and to determine the position of the box with respect to the robot based on the image of the box, and to determine a place position of the component at the second site, based on the determined position of the component with respect to the robot, and the determined position of the box.

The robot system according to the invention is, for example, suitable for packing pieces of furniture into boxes.

### BRIEF DESCRIPTION OF THE DRAWINGS

The invention will now be explained more closely by the description of different embodiments of the invention and with reference to the appended figures.

Fig. 1 shows a robot system for picking and placing components according to a first embodiment of the invention.

Fig. 2 shows a robot system for picking and placing components according to a second embodiment of the invention.

Fig. 3 shows a flow diagram of a method for picking and placing components according to an embodiment of the invention.

### DETAILED DESCRIPTION OF PREFERRED EMBODIMENTS OF THE INVENTION

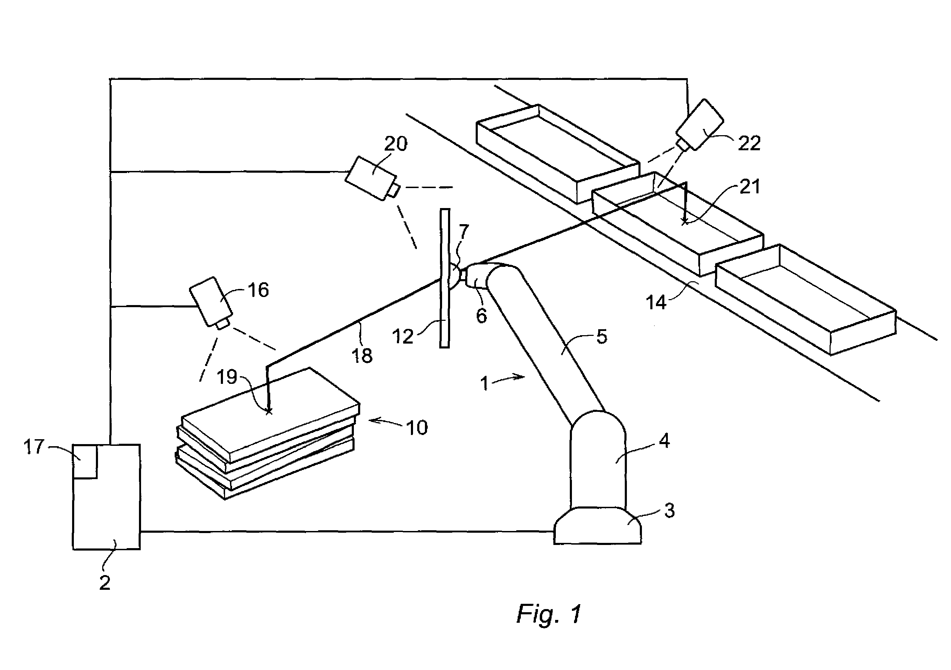

Figure 1 shows an example of a robot system for picking and placing components according to the invention. The robot system comprises an industrial robot including a manipulator 1 and a robot controller 2 for controlling the movements of the manipulator. In this example the manipulator has three main axes and three wrist axes. A stationary foot 3, usually referred to as the base of the robot, supports a stand 4 which is rotatable about a first axis. The stand 4 supports a first arm 5 which is rotatable about a second axis. The first arm 5 supports a second arm 6 which is rotatable about a third axis. The second arm 6 supports a wrist which is rotatable about a fourth, fifth and a sixth axis. The wrist supports a picking tool 7, for example, a suction cup or a gripper. The robot is programmed to pick one component at a time from a stack of components 10, for example pieces of furniture. In the figure, the robot has picked one component 12. The robot is further programmed to move the picked component 12 from a first site, at which the stack 10 of components is positioned, to a second site and to place the component at the second site. In this example, the second site includes a conveyer 14. The conveyer 14 supplies boxes into which the components are placed. The stack 10 of components is, for example, positioned on a product pallet. The components of the stack are randomly placed in the stack.

The robot controller 2 includes hardware necessary for controlling the movements of the robot, such as a processing unit, memory, and means for communication with the manipulator, and other types of equipment, such as cameras. The robot controller comprises program storage for storing a robot program including series of robot program instructions written in a robot language, and a program executor adapted to execute the stored robot program instructions. The robot instructions include information on positions on a path to be followed by the robot during execution of the robot program, and the robot speed on the path. The robot instructions also include information on tool orientations along the path.

The robot system further comprises a camera unit including three cameras 16,20,22. A first camera 16 is arranged to acquire an image of the top component on the stack. The image from the first camera 16 is used to determine the position of the component on top of the stack. The captured image is sent to a computing unit 17, which is configured to determine the position of the component based on the image of the component. In this example, the computing unit 17 is a part of the robot controller, and accordingly the image is sent to the robot controller 2. The computing unit 17 includes software for analyzing the image and for determining the position of the component with respect to the robot. The determined position is used for calculating a picking position 19 and to generate a path for the robot to follow in order to pick the component.

The robot is programmed to follow a path 18 between the first site and the second site. At least a part of the path between the first and second site is predefined. This path is selected so that the time it takes to move the component between the first and second site is minimized in order to save cycle time. The robot system further comprises a second camera 20 fixedly arranged in a position close to the predefined path 18. The second camera 20 is arranged to capture images of the components after they have been picked. The images captured by the second camera 20 are used to determine the position of the component with respect to the robot after the component has been picked and the picking tool holds the component. The determined position of the component is used to determine a deviation between the present position of the component and a standard position of the component defined with respect to the robot. This deviation is used to correct the robot movements for placing the component at a second site. The pre-programmed path 18 is the path to be followed by the robot tool while moving the component between the first and the second site. The positions on the pre-programmed path at the fist and second site can be adjusted in dependence on the picking position 19 and place position 21 of the component.

The robot controller 2 is configured to control when the second camera 20 is trigged to captures an image by generating an order in the form of a trigging signal that is sent to the camera 20. The robot controller is configured to generate the trigging signal to the camera at a predefined position, in the following called the trigger position, on the predefined path 18. For example, the order about capturing an image is sent to the second camera when the picking tool of the robot is in the trigger position along the path. The robot program, which controls the movements of the robot along the path 18, includes one or more program instructions that generate the trigger signal to the second camera 20 when the robot is in the trigger position. As the same program is controlling the movements of the robot and generates the trigging signal, the program knows when the robot is in the trigger position and accordingly when the trigging signal is to be generated. Thus, it is not necessary to detect when the robot is in the trigger position. The image is captured while the robot is moving along the path. Thus, it is not necessary for the robot to stop at the trigger position. Instead, the image is captured while the robot is moving through the trigger position. The trigger position is selected such that the component is in a suitable position relative to the camera in the trigger position in order to capture an image of the component. It is enough to capture an image of a recognizable part of the component, for example, a corner of the component.

In this embodiment the robot controller 2 includes software for analyzing the received images. The captured image is sent to the robot controller which analyzes the image and determines the position of the component with respect to the robot. In an alternative embodiment the image can be sent to an external computer which comprises software for analyzing the image and for determining the position of the component. The determined position is sent to the robot controller. For example the position of the component is determined based on a model of the component. The model of the component is, for example, prepared based on an image taken in advance of the component in a standard position. The deviation between the determined position of the component and the standard position is determined with respect to the robot.

The next step is to determine the place position 21 of the component at the second site, in this example, the position into which the component is to be placed in the box on the conveyer 14. For this purpose a third camera 22 is mounted close to the conveyer 14 such that the camera takes images of the boxes. The position of the box is determined based on the image captured from the camera 22. In this embodiment the third camera 22 is connected to the robot controller 2, and the robot controller controls when the camera captures an image of the box. The image is sent to the robot controller for analyzing and determination of the position of the box. The place position 21 of the component is calculated based on the determined position of the component with respect to the robot, and the determined position of the box. A new corrected path for the robot to place the component is calculated based on the place position of the component. Although, the path between the first and second site is predefined, the path can be adjusted during execution of the program due to the position of the component to be picked at the first site and the position to place the component at the second site. All positions on the path can be adjusted, except for the trigger position. The trigger position is fixed and is not allowed to be adjusted. The robot may follow different paths to the trigger position and may follow different paths while leaving the trigger position, as long as the trigger position is passed through with the same tool orientation.

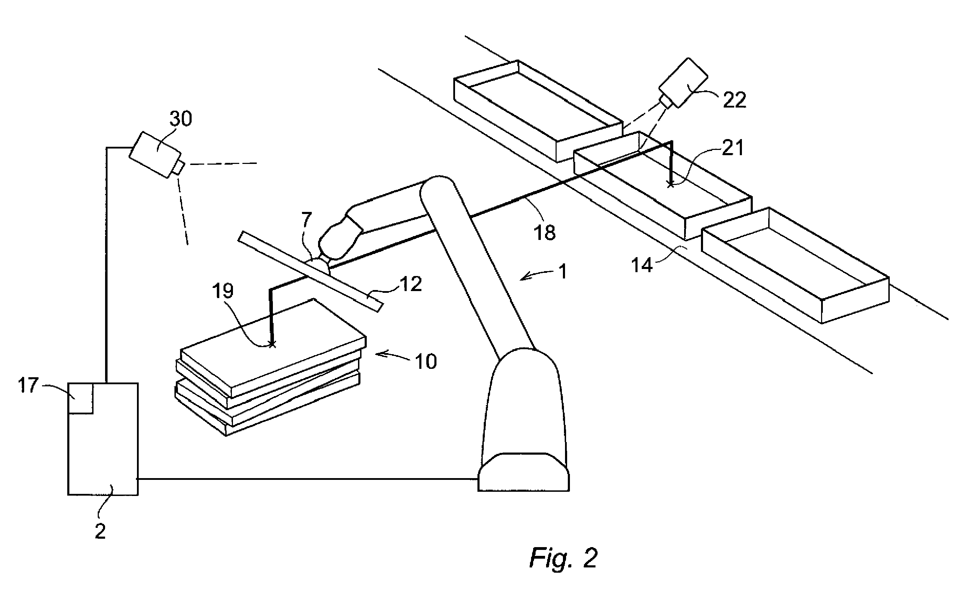

Figure 2 shows another embodiment of the present invention. Elements corresponding to the ones of the first embodiment, shown in figure 1, are given the same reference numbers as the corresponding elements of that embodiment. This embodiment differs from the embodiment shown in figure 1 in that the same camera 30 is used for determining the position of the component on top of the stack 10 and to determine the position of the picked component moving on the path 18 on its way to the second site. The position of the camera 30 is selected so that it is possible to capture an image of the component on top of the stack as well as an image of the picked component. The trigger position on the path 18, in which an image is captured of the picked component, is selected to be at the first site and accordingly close to the stack 10.

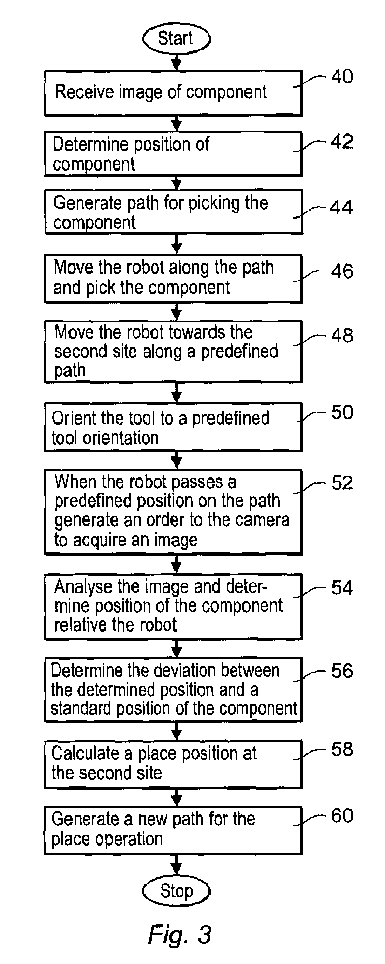

Figure 3 is a flow chart illustration of a method for picking and placing components according to an embodiment of the present invention. It will be understood that each block of the flow chart can be implemented by computer program instructions.

A picking and placing cycle begins with capturing an image of the component. This image is sent to a computing unit, for instance the robot controller. The computing unit receives the image of the component, block 40. The position of the component to be picked is determined based on the received image of the component, block 42. The determined position is used to calculate a picking position for the tool, and a path for picking the component is generated based on the calculated picking position, block 44. Alternatively, a pre-programmed picking path is adjusted based on the picking position. The robot is instructed to move along the picking path and picks the component, block 46.

When the robot has picked the component the robot holding the component is moved towards the second site along a predefined path with a predefined speed, block 48. During the movements of the robot, the robot tool is oriented to a predefined tool orientation, block 50. This predefined tool orientation is selected so that it is favourable with respect to the camera 20 when capturing the image. When the robot passes a predefined trigger position on the path the robot generates an order to the camera to acquire an image, block 52. The trigger position is selected such that it is favourable with respect to the camera 20. For example, the robot programmer defines the trigger position and tool orientation. The robot does not slow down its motion while passing the trigging position. The order to the camera is generated by the robot program itself.

The captured image is sent to a computing unit, for instance to the robot controller and is analyzed, and the position of the component relative the robot is determined based on the result of the analyzing, block 54. The deviation between the determined position of the component and a standard position of the component is determined, block 56. Based on the deviation a suitable position for placing the component at the second site is calculated, block 58. In the embodiment disclosed in figure 1 an image of the box on the conveyer is captured and the position of the box is determined based on the image. In this case the place position at the second site is calculated based on the determined position of the box as well as the deviation between the determined position and standard position of the component. When the position to place the component has been calculated a new path for the place operation is generated by the robot controller, or a pre-programmed place path is adjusted, block 60.

The present invention is not limited to the embodiments disclosed but may be varied and modified within the scope of the following claims. For example, the first site may include a conveyer and the component to be picked is transported on the conveyer. In this case there is no stack of components. The first camera is then used to determine the position of the component on the conveyer.

## Claims

1. A method for picking components at a first site (10) and placing the components at a second site (14) by means of an industrial robot (1) holding a picking tool (7), and the robot is programmed to move along a predefined path (18) between the first and second site and the movements of the robot along the path is controlled by a robot program, and the method comprises:
arranging a camera (20) in a fixed position close to the predefined path (18),
instructing the robot to pick a component at the first site, moving the robot holding the component along the predefined path,
orientating the tool to a defined orientation,
generating an order to the camera to acquire an image of the component at a predefined point on the predefined path while moving the robot along the path, wherein the order to the camera is generated by the robot program, and
determining the position of the component with respect to the robot based on the acquired image of the component,
determining the deviation between the determined position of the component and a standard position of the component defined with respect to the robot,
calculating a place position (21) at the second site for the component based on the deviation, and
generating a new path for the robot to place the component at the second site based on the calculated place position.

2. The method according to claim 1, wherein the components are randomly placed in a stack (10) of random height and the method comprises acquiring an image of the component on top of the stack, determining the position and orientation of the component on top of the stack based on the captured image, and generating a path for the robot to pick the component based on the determined position and orientation of the component.

3. The method according to claims 1 or 2, wherein the components are to be placed in boxes delivered on a conveyer at the second site, and the method further comprises:
arranging a camera such that it captures images of the boxes on the conveyer,
determining the position of one of the boxes with respect to the robot based on the image of the box, and
determining a place position (21) of the component at the second site, based on the determined position of the component with respect to the robot and the determined position of the box.

4. A robot system for picking and placing components comprising:
an industrial robot (1) configured to pick components at a first site (10) and to place the components at a second site (14), the robot is programmed to move along a predefined path (18) between the first and second site and the movements of the robot along the predefined path is controlled by a robot program,
a robot controller (2) arranged to execute the robot program,
a camera unit arranged to capture images of the component,
a computing unit (17) configured to determine the position of the component with respect to the robot based on the image of the component, and to determine the deviation between the determined position of the component and a standard position of the component defined with respect to the robot, and the robot controller is configured to correct the robot movements for placing the component at the second site based on the determined deviation, **characterized in that** the camera unit includes a camera (20;30) fixedly arranged in a position close to the predefined path, and the robot controller is configured to generate an order to the camera to capture an image of the component at a predefined point on the predefined path with the tool in a predefined tool orientation, while moving the robot holding the component along the path, and the order to the camera to capture an image of the component is generated by the robot program.

5. The robot system according to claim 4, wherein the components are randomly placed in a stack (10) of random height and the camera unit includes a camera (16;30) arranged to capture an image of the component on top of the stack, said computing unit (17) is configured to determine the position and orientation of the component on top of the stack based on the captured image, and the robot controller (2) is configured to generate a path for the robot to pick the component based on the determined position and orientation of the component.

6. The robot system according to claim 5, wherein the same camera (30) is used to capture images of the component on top of the stack and to capture images of the component after the robot has picked the component.

7. The robot system according to any of the claims 4-6, wherein the components are to be placed in boxes delivered on a conveyer at the second site, and the camera unit comprises a third camera (22) mounted such that it captures images of the boxes on the conveyer, the computing unit (17) is configured to receive the images and to determine the position of the box with respect to the robot based on the image of the box, and to determine a place position (21) of the component at the second site, based on the determined position of the component with respect to the robot, and the determined position of the box.

8. Use of the robot system according to any of the claims 4 - 7 for packing pieces of furniture into boxes.
